# EUROPEAN PATENT APPLICATION

(11) **EP 1 643 783 A1**
(43) Date of publication of application: **05.04.2006**
(21) Application number: 05255904.4
(22) Date of filing: 22.09.2005
(51) Int. Cl.: H04Q 7/36

(54) **Interference control in CDMA networks**

(30) Priority: 29.09.2004 US 953994
(71) Applicant: LUCENT TECHNOLOGIES INC., Murray Hill, NJ 07974-0636 (US)
(72) Inventor: Urs, Peter Bernhard, 90482 Nürnberg (DE); Günther, Lothar Wolf, 90489 Nürnberg (DE)
(74) Representative: Sarup, David Alexander

(57) **Abstract**

It is proposed to decrease the interference in a CDMA network by automatically adapting the radiation pattern, and thereby the coverage areas, of a cell to the service coverage area without operator intervention. This will increase the overall capacity of the network, because a fully loaded cell generates less interference to neighboring cells and hence leaves more capacity in those cells. It will avoid coverage holes in case certain cells become highly loaded such that their coverage area shrinks ("cell breathing"). In an embodiment of the invention, the radiation pattern is adapted by changing the down-tilt of the antenna.

## Description

### Technical Field

This invention relates to wireless networks, and in particular, to methods and apparatus for controlling interference in such networks.

### Background of the Invention

Normally, in a wireless cellular communication system the mobile terminals may be connected to whichever base station has the best received signal quality. This allows the transmit power at the base station and at the mobile terminal to be reduced to a minimum level, which in turn also results in a minimum interference in uplink (UL) and downlink (DL) as every transmitted user signal generates some interference to all other user signals in the network. Interference may obscure the signals being received and thus increase the error rates. Hence reducing the interference in both UL and DL is an important consideration in network design and operation.

The discussion herein refers particularly to a UMTS (Universal Mobile Telecommunication System) mobile radio network, which is based on CDMA (code division multiple access) technology, though the invention is not limited to a UMTS application and may include other multiple access technologies employed in wireless communication, such as OFDMA (orthogonal frequency division multiple access) for example. In CDMA-type networks, the interference situation is especially critical as a frequency re-use of one is being applied, *i.e.,* the same carrier frequency is used in every base-station (known as "NodeB" in UMTS terminology), throughout the entire network. In consequence, all signals of one cell may disturb all the signals in the neighbor cells. Interference in the neighbor cells may increase as the signal powers increase. At the same time, the received signal quality in the neighbor cells decreases, *e.g*., the error rates may increase. In order to compensate for that, the mobile terminals (called "user equipment" ("UE") in UMTS terminology) and the NodeBs in the neighboring cells may increase transmit power as well. Applying soft handover in CDMA-type networks minimizes the impact of such behavior. With a frequency re-use of one, a UE can receive signals from all relevant neighboring cells simultaneously, *e.g*., the UE is connected to several cells at the same time. These cells are known as the "Active Set" cells. The power in UL and DL is typically controlled according to the signal quality for the best cell in the active set so as to be, e.g., the minimal signal power needed. If the power were to be controlled by a cell with a bad signal quality, then the quality in the best cell might be much too good (*e.g*., the signal power would be higher than necessary) and, hence, too much interference might be generated.

A major consequence of this is that, as is well known, CDMA-type networks are what is known as "interference limited". The "limitation" referred to here is with respect to the network load in UL and DL, *i.e.,* the number of users with the required service (*e.g*., data rate) and the associated power needed to support those services at the respective user locations. "Interference limitation" may mean that the load in a network (*e.g*., basically the load in every cell) may not be increased above a certain level without impacting the quality of the active services. For a certain network load, the interference may reach a maximum tolerable level such that additional users or existing users requiring more power might generate additional interference, which might not be compensated for any more. As a consequence, the_quality of all services in the network could degrade gradually. This effect is also widely known as "graceful degradation". It affects the system in both UL and DL.

Mobile radio networks are usually designed to support a certain number of users in a certain area of the network. Owing to the fact that the users and their equipment are mobile, it is often observed in the networks that the load varies with time. "Load" is used as a general term here for UL and DL load. For example, the load distribution may be different in working and evening hours and it will also differ between working days and weekends. For network operators, such fluctuations have considerable adverse consequences, as the network has to be designed such that every cell or cluster of cells can support an estimated maximum load in the corresponding area. For example, the cell or cells covering a shopping street are advantageously designed for peak shopping hours, not for the load during working hours. A consequence of this is that there has to be a considerable amount of over-capacity in the network, as some cells may have their slack periods and thus carry little load at the same time as others may have their peak periods and thus be highly loaded.

In order to make better use of the existing equipment, it might be advantageous if the load were evenly distributed among all the cells in the network. The number of cells (*e.g*., NodeBs) required to achieve a certain coverage could then also be reduced. Operators therefore could seek opportunities to balance the load in their networks. For example, certain users that may be supported by one cell may be re-directed to another cell. This is commonly known as "load balancing".

In CDMA-type networks, load balancing is in fact not possible by re-directing (assigning) certain users to other (neighboring) cells. This is due to the fact that, as discussed above, the load in the network and in the cells is limited by interference. If a certain cell becomes overloaded, the interference in that cell may fail to be reduced by re-directing certain users to a neighboring cell. The interference may still remain, as the user may still be at the same location. In most cases, the situation will be made even worse and the interference will increase. This is because beforehand the UE was attached to the best cell (*e.g*., lowest transmit signal needed), whereas after redirection the connection is through a cell that requires higher transmission power. As a consequence, load balancing by means of simply transferring users from one cell to another cell may not be feasible in CDMA-type networks. It might not make sense, in such networks, to perform load-based handover to another cell on the same frequency.

A problem with the design of CDMA-type networks is therefore that planning the network for almost equal load in all cells is complicated and time consuming. Also, the network layout needs to be planned for a high load scenario (worst case) as otherwise coverage holes might appear, as discussed in more detail below. This may lead to a high density of cells (NodeBs) as they are all planned for high loads. The network layout may also be inflexible in that no load balancing is possible. Hence, only a part of the network may be highly loaded while other parts carry little traffic at the same time.

Moreover, load control mechanisms with conservative parameter settings may need to be put in place in UL and DL to avoid increasing the load above the critical level. If this happens, it may have the result that a user located at the outer area of the cell may no longer receive the signal at the required quality (bit error) level and therefore may basically be out of the coverage area of the network. Such a user may not be able to initiate or receive a call, and it could even happen that an ongoing call of such a user may be dropped, being effectively outside the service area. From the point of view of the users, networks with coverage holes may be regarded generally as bad, even though the coverage hole might only exist temporarily because of a currently very high number of users in that area. Therefore, network operators are particularly concerned about such temporary coverage holes, especially as it may be impossible to detect them by means of drive-tests. Most often they are first brought to the attention of the operator by customer complaints.

In some proposals it has been suggested to approach this problem by adjusting the pilot powers of the cells in the network. With this method, the footprint of the cell will be changed along with the service coverage area. However, owing to the fact that the overall transmitted power in the cell (NodeB and UE side) may fail to be reduced, the interference situation may remain basically the same. Coverage holes may also fail to be overcome by that means. By changing the pilot power of the cells, the handover area may be changed because most handover algorithms make use of pilot power measurements. However, as has been pointed out above, load based handover between cells might not solve the problem of load balancing.

### Summary of the Invention

According to a first aspect of the invention, a base station is provided for a cell of a multiple access wireless network, such as a CDMA-type system, wherein the cell is subject to a variable traffic load, the base station including an antenna; means for producing a measure of the traffic load; and means for adapting the radiation pattern of the antenna in response to the measure of traffic load such as to reduce the coverage area of the antenna if the load increases.

According to a another aspect of the invention, a multiple access wireless network such as a CDMA-type system includes a plurality of base stations serving respective cells, each cell having a traffic load situation and each base station having one or more antennas and means for adapting the radiation pattern of at least one of its one or more antennas and a network controller; a plurality of said base stations being arranged to send to the network controller information about the traffic load situation in the respective cells; the network controller being responsive to the information to send signals to the base stations to control the means for adapting the radiation patterns.

According to another aspect of the invention, a method is provided for operating a base station serving a cell of a multiple access wireless network, such as a CDMA-type system, said cell being subject to a variable traffic load, said base station including an antenna; said method including producing a measure of said traffic load; and adapting the radiation pattern of the antenna in response to said measure of traffic load such as to reduce the coverage area of the antenna if the load increases.

Preferably said adapting the radiation pattern of the antenna comprises controlling the tilt of the antenna. Preferably said adapting the radiation pattern of the antenna comprises increasing the tilt of the antenna in a downward direction from a minimum tilt to a maximum tilt as the load increases from a minimum level to a maximum level. Preferably, the variation of tilt with load is piecewise linear. Preferably said adapting maintains the tilt at said minimum tilt for values of load below a first value, increases the tilt linearly with load for values of load between said first value and a second value and maintains the tilt at said maximum value for values of load greater than said second value.

Preferably said producing a measure of said traffic load employs a transmit signal strength indicator (TSSI). Alternatively preferably said producing a measure of said traffic load employs a received signal strength indicator (RSSI).

. According to yet another aspect of the invention, a method is provided for operating a multiple access wireless network, such as a CDMA-type system, including a plurality of base stations serving respective cells, each cell having a traffic load situation and each base station having one or more antennas and being capable of adapting the radiation pattern of at least one of its one or more antennas; the method including sending from the base stations to a network controller information about the traffic load situation in the respective cells; the network controller responding to the information by sending signals to the base stations to control the means for adapting the radiation patterns; and the base stations responding to the signals by adapting the radiation patterns. Preferably said adapting the radiation pattern of the antennas comprises controlling the tilt of the antennas.

The present invention proposes to decrease the interference in a multiple access network, such as a CDMA-type system, by automatically adapting the radiation pattern, and thereby the coverage areas, of a cell to the service coverage area without operator intervention. This will increase the overall capacity of the network, because a fully loaded cell may generate less interference to neighboring cells and hence may leave more capacity in those cells. It may avoid coverage holes in case certain cells become highly loaded such that their coverage area shrinks ("cell breathing").

In an embodiment of the invention, the radiation pattern may be adapted by changing the down-tilt of the antenna. The basic effect of adaptively controlling the down-tilt of the antenna is the interference control in the area of the cell as well as in the neighbor cells. Interference may be radiated to the area where the coverage (*e.g.*, service) can be supported. In case the cell shrinks, thus reducing the service area, the interference may be autonomously limited to that area. As a consequence of adaptively controlling the interference, the load in the network can also be balanced autonomously. If the antenna down-tilt is changed, the handover region between the cells will also change. Owing to the fact that handover region and interference in the network are coupled in this embodiment, load balancing between the cells may be an inherent feature.

In an embodiment of the invention, interference control and load balancing may be achieved in a self-optimizing way. Hence, no operator intervention is necessary.

In the simplest embodiment, no feedback information to a network controller may be required. Instead, every cell (NodeB) may act autonomously. However, feeding back information to the controller can further improve the self-optimization.

The basic advantage is that the overall interference in a CDMA network may be controlled in a favorable way to achieve improved overall carried traffic (capacity). The interference may be controlled in a way that highly loaded cells generate less relative interference to neighboring cells than low loaded cells. Hence, interference may be kept at an acceptable level. This basic advantage can be translated to a number of secondary advantages, including:
a) Interference control will automatically lead to load control in CDMA networks. As a consequence, interference control will also lead to load balancing, which cannot be achieved otherwise on one single carrier *(i.e.,* with a frequency re-use of one).
b) In an existing network the capacity is increased without the need to install additional equipment, saving capital and operating expenditure for operators.
c) Changes in existing networks are relatively minor. Each NodeB can operate autonomously without any control or feedback by the network controller.
d) Because of the self-optimization, it is possible to plan a network using fewer sites. Again this saves capital and operating expenditure for the operator.
e) In any given network, in very high load situations the overall radiated power is smaller. This not only saves electrical power but also reduces the emissions-and thereby electromagnetic pollution.
f) The control of interference as handled by every NodeB individually is performed automatically in an optimal way resulting in improved overall network performance. The overall network is therefore acting in a self-optimizing manner.

### Brief Description of the Drawing

Embodiments of the invention will now be described by way of example with reference to the accompanying drawings, of which:
FIG. 1 shows a sector of a cell illustrating the variation of the extent of the service area with traffic;
FIG. 2 shows a sector of a cell, illustrating the footprint and the usable area;
FIG. 3 shows an antenna of a base station and illustrates the radiated area and usable areas at normal and high load;
FIG. 4 shows the sector of FIG. 2 also showing the usable area at high load;
FIGs 5A and 5B show the antenna of a base station according to an embodiment of the invention at different load levels;
FIG. 6 shows an exemplary adjustment of antenna tilt as a function of load in an embodiment of the invention;
FIGs 7A, 7B and 7C show arrangements for deriving antenna tilt control in respective embodiments of the invention; and
FIG. 8 shows the relevant parts of a network according to an embodiment of the invention in which adaptation of the radiation patterns of the antennas is controlled by a network controller.

### Detailed Description

In a CDMA-type network, if the load increases in the network or in a certain cell, an effect called "cell breathing" can be observed. This phenomenon simply means that the service area of a cell, *i.e.,* the area where users can access the network through this particular cell, shrinks when the load in the cell (*i.e.,* the traffic) increases and *vice versa.*

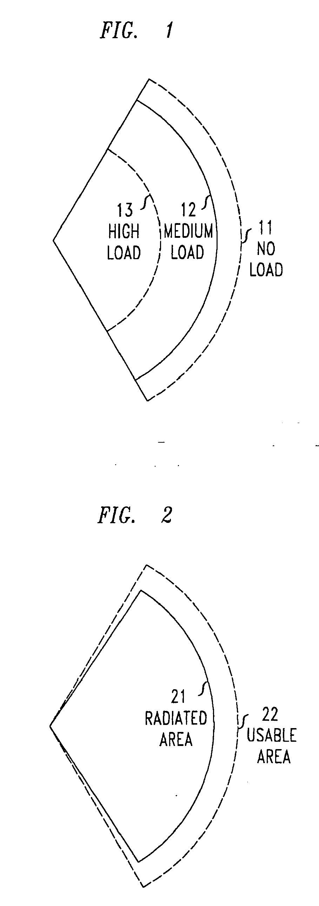

FIG. 1 shows a sector of a cell. The outer boundary of the service area in conditions of no, or very light, load is shown as a chain-dashed line 11. In conditions of medium load, the interference caused by the traffic means that the outer portion of the sector, where the signals are weaker, is no longer usable, so the service area shrinks, having an outer boundary as shown by the continuous line 12. Under conditions of heavy load the service area shrinks still further, owing to the increased interference, having an outer boundary as shown by the dashed line 13.

As shown in FIG. 2, cell breathing has the consequence that the actual footprint 21, *i.e.*, the area to which RF energy is radiated, is larger than the actual usable area 22. On the other hand the coverage area (*i.e.,* the area where the pilot signal (transmitted with a fixed, load independent power) of the cell can be received) might not change and may be set by cell planning. Depending on the network planning strategy this can either lead to a cell having a larger service area than coverage area in low traffic situations (which is a disadvantage as it artificially decreases the interval between base stations, therefore increasing both capital and operating expenditure for the network operator) or creating service area "holes", or black spots in high load situations, where the service area may be smaller than the coverage area.

In other words, when the number of users is too high in a certain cell, so that the interference becomes too high, then calls in the border area of the cell might no longer be supported. The interference in the border area might be too high, so the actual usable area of the cell shrinks. However, it should be noted that the interference caused by traffic in the cell, as experienced in the non-usable area and also in the neighboring cells, might not be reduced with the reduction of the usable area of the cell. A high traffic load in CDMA-type networks inherently gives rise to high values of radiated power and therefore high interference to neighbor cells.

In this specification, by "high load" we mean that level of load such that, without adaptation of the radiation pattern of the antenna, the usable area of a cell is reduced to a smaller area than its coverage area. A "moderate load" or "low load" means that the usable area is not smaller than the coverage area.

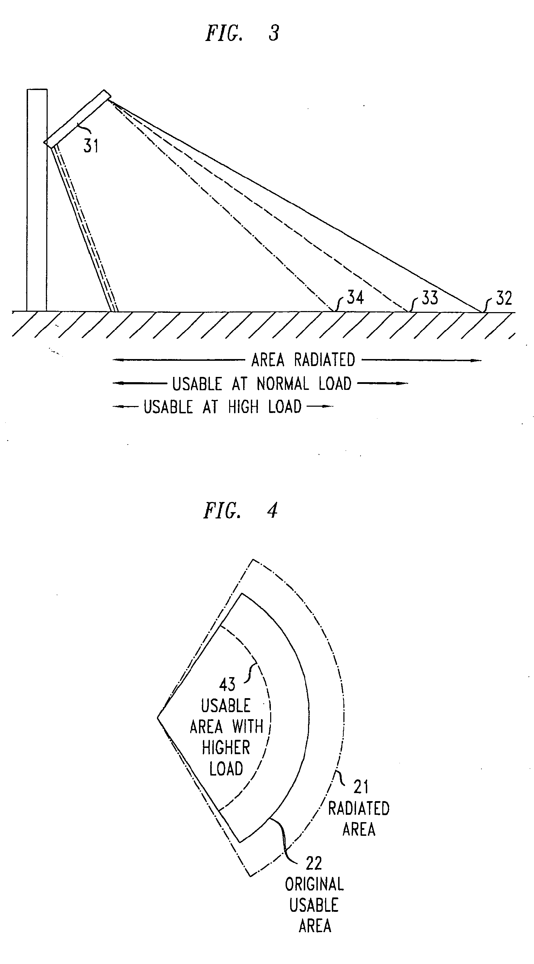

FIG. 3 shows an antenna 31 of the base station (NodeB). The area radiated by the antenna 31 reaches to a distance 32, whereas the area which is usable under conditions of normal load only reaches to a lesser distance 33 and the area usable under conditions of high load reaches to a distance 34 which may still be less.

FIG. 4 shows the radiated area 21 and usable area 22 under conditions of moderate load, as shown in FIG. 2. In addition, it can be seen that under conditions of higher load the usable area may shrink still further to a smaller area 43. With cell breathing, the usable area of a cell shrinks but the interference situation remains unchanged such that the overall load in the network may not be increased.

The above problems may need to be taken into account during network planning. Owing to the fact that load balancing by means of handing over users to other cells may not be possible, with high network loads cell breathing may cause coverage holes where no calls are possible. It is state of art currently to plan networks for a certain predicted load in UL and DL. The cell sizes may be adapted in a way such that the load to be carried by every cell is about the same. Hot spots with many users and requests for very high data rates will be covered with small (pico) cells. Areas with low user density and moderate data rates are covered with large (macro) cells.

By such a procedure, cells in the network may be loaded up to the predicted level without harming the network availability due to coverage holes appearing between the cells.

The problem addressed arises from the fact that in highly loaded cells the service area decreases while the coverage area remains unchanged and the interference increases. In very high load situations the cell coverage area may shrink (cell breathing), whilst the interference situation in UL and DL in the entire cell and also in the neighbor cells remains unchanged. In order to bring down the interference at the cell border and in neighbor cells (and decrease the footprint of the cell at the same time) the radiation pattern of the antenna may be changed. This can be achieved with antennas supporting the remote electrical tilt feature.

In one embodiment of the invention, the tilt angle of the antenna is coupled to the radiated power. This means the down-tilt, i. e., the angle of the antenna phase center pointing below the horizon towards the earth surface, is increased whenever the radiated power is increased, either immediately or starting only at a certain power level and decreased when the power abates.-This effectively changes (*i.e*., decreases) the cell footprint during high power.

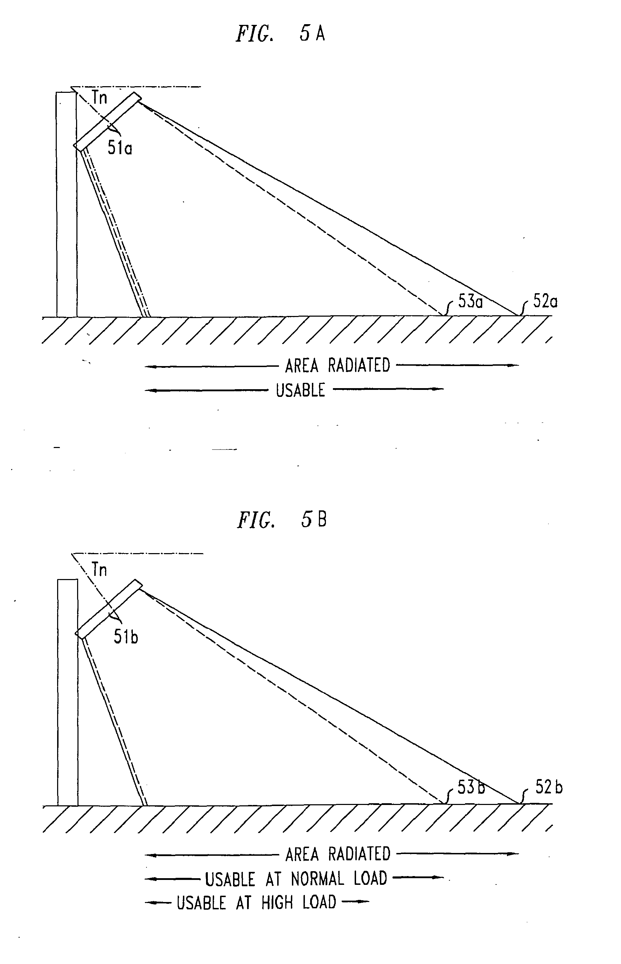

FIG. 5A shows an antenna 51a operating under conditions of normal load, with a tilt Tn. The radiated area extends to a distance 52a and the usable area to a distance 53a. In FIG. 5B the antenna 51b is shown operating under conditions of heavy.load. The tilt has been increased to Th. The usable area has shrunk to a smaller distance 53b, as in FIG. 3, but in this case the radiated area has also shrunk, because of the increased tilt, and now extends to a lesser distance 52b. Thus the cell footprint may be reduced and the interference from the cell as experienced in neighboring cells may also be reduced.

Currently, networks are designed and planned for a certain load in every cell. The pilot power and the antenna down-tilt may be set accordingly. With the present proposal, however, network planning can start from a moderate loaded network. The antenna tilts may then be set to a value that is less restrictive, actually generating higher interference in neighbor cells. As long as the network load is only moderate, the radio resource management algorithms can handle that situation without any problems. If the load in one cell increases, the down-tilt of the antenna may be increased. This may cause less interference to the neighbor cells such that the overall load carried in the network can still be accommodated. Owing to the fact that the neighbor cells still use less restrictive settings for the down-tilt, they can accommodate the traffic of the users in the border areas. As a further advantage, no changes to handover algorithms may be required, as the measured pilot signal power is coupled to the antenna tilt. When the down-tilt is increased, the handover region may move towards the cell center (*e.g*., the coverage and the footprint become smaller at the same time).

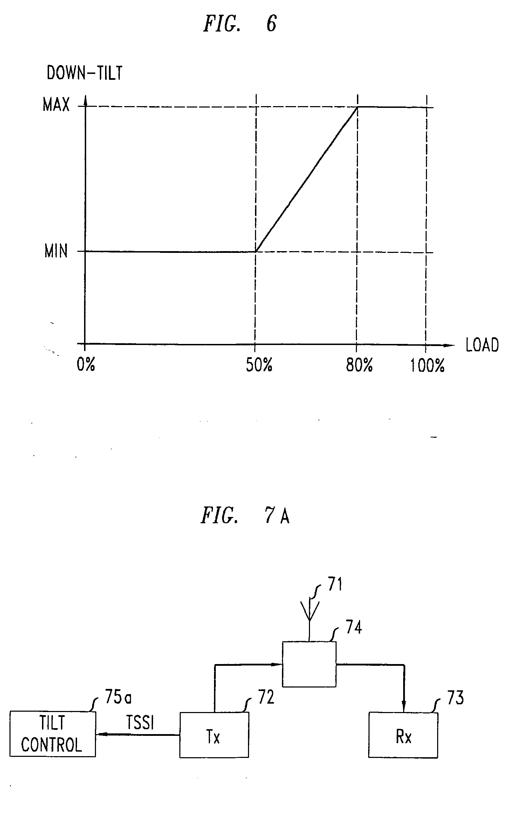

An example function showing the relationship between the antenna down-tilt and the cell load is depicted in FIG. 6. For values of load between zero and about 50% of the maximum load, the tilt of the antenna is maintained constant at a minimum value MIN. For load values between 50% and 80% of maximum load the tilt is increased as a linear function of load up to a maximum value MAX, and for load values greater that 80% of maximum load the tilt may be maintained at the maximum value MAX.

The antenna down-tilt may be varied between a minimum and a maximum value as defined or configured during network / cell planning. In the embodiment shown in FIG.6, a linear relationship is assumed between a cell load of 50% to 80%. Alternatively, other (non-linear) functions could be applied and the antenna down-tilt could be varied over the entire range from 0% to 100% cell load.

The cell load can be assessed either in UL or DL or as a combination of both. For example, either UL or DL load could be used, depending on which is the higher value of the two. Most probably, for DL load the TSSI (transmit signal strength indicator) and for the UL load the RSSI (received signal strength indicator) measurements will be used. Other load indications such as the channelization code usage might be used, either instead of or in combination with TSSI / RSSI measurements.

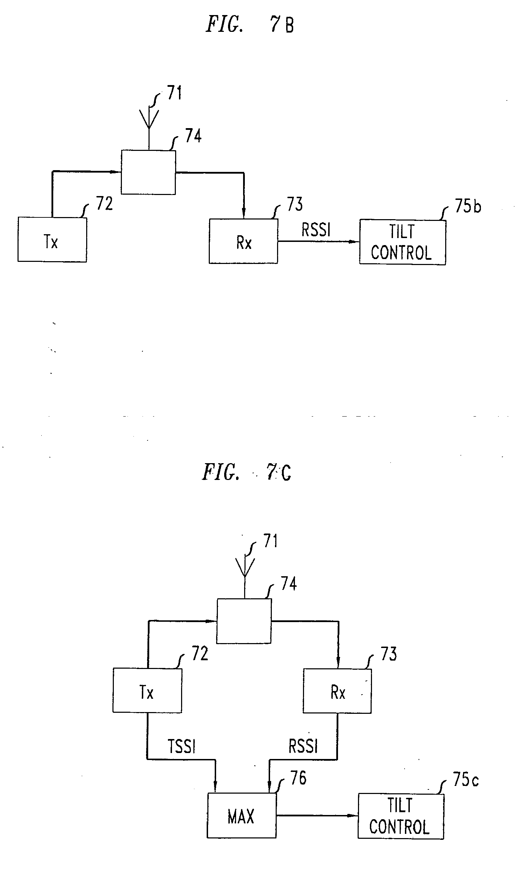

These three arrangements are illustrated in FIGs 7A, 7B and 7C respectively.

FIG. 7A shows an antenna 71 connected to receive signals for transmission from a transmitter 72 and to deliver signals to a receiver 73 via a hybrid circuit 74. The transmitter 72 produces a TSSI measurement, which is indicative of the load in the cell served by the antenna 71. These TSSI measurements are supplied to a tilt control circuit 75a, which adjusts the tilt of the antenna 71 in response to the load as indicated by the TSSI measurement.

FIG. 7B shows a similar arrangement of antenna 71, transmitter 72, receiver 73 and hybrid circuit 74, but in this case the receiver 73 produces a RSSI measurement, which is supplied to a tilt control circuit 75b, which adjusts the tilt of the antenna 71 in response to the load as indicated by the RSSI measurement.

FIG. 7C shows a similar arrangement of antenna 71, transmitter 72, receiver 73 and hybrid circuit 74, but in this case both the transmitter produces a TSSI measurement and the receiver produces a RSSI measurement and both are supplied to a circuit 76 set up to derive a control signal corresponding to whichever is greater of the load as measured by the TSSI and the load as measured by the RSSI. This control signal is supplied to a tilt control circuit 75c, which adjusts the tilt of the antenna 71 in response to the load as determined by the RSSI and the TSSI jointly. Alternatively, instead of using the maximum of the RSSI and TSSI measurement it would also be possible to combine the two measurements to produce a combined UL/DL load measure for the cell. This new control signal would then be supplied to the flit control circuit 75c.

Changing the antenna down-tilt may have direct impact on the load measured in UL and DL (*e.g*., it will impact RSSI and TSSI measurements). In the UL direction, when increasing the down-tilt, the NodeB might no longer receive from UEs far away from the antenna and, hence, the load (RSSI) might decrease. The TX power of the UEs remaining connected to that cell can also be reduced as there may be less interference at the NodeB antenna. In the DL direction, UEs that are far away may no longer receive the signal (pilot) at the required quality level and, hence, those UEs may need no longer be served by that cell. The NodeB may not need to transmit a signal to those UEs and, hence, the load in DL (TSSI value) may decrease as well. In either case a kind of handoff is achieved, though it is not done directly in response to increased load, which may be ineffective in CDMA-type networks, as discussed above, but indirectly in response to the changed antenna radiation pattern.

This scheme can be further enhanced by letting the radio network controller control the down-tilt as a function of the overall traffic situation in the network. In this case, further parameters (for example, location of the mobile stations within the cells and the condition in neighbor cells) can be taken into account when selecting the optimal down-tilt angle, leading to a self-optimizing network.

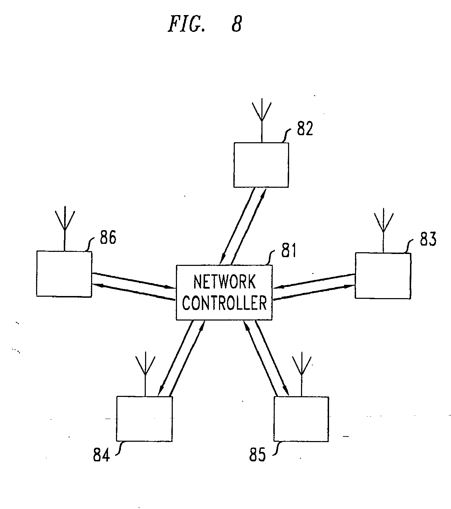

FIG. 8 shows a CDMA-type network including a network controller 81 and a plurality of base stations 82, 83, 84, 85 and 86 each serving a respective cell. Each of the base stations is connected to the network controller 81 and sends signal to it providing information about the traffic situation in its respective cell, optionally including detail such as the location of the mobile stations within the cell. The network controller 81 receives the information from the base stations and determines which of the base stations need to adjust adapt their radiation patterns, such as by changing the tilts of their antennas, to achieve optimum coverage as the traffic load in the cells varies. The network controller 81 sends signal back to the base stations to control their adaptation of their radiation patterns, *e.g*., antenna tilt.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A base station comprising:
an antenna;
means for producing a measure of a traffic load; and
means for adapting the radiation pattern of the antenna in response to said measure of traffic load to reduce the coverage area of the antenna if the load increases.

2. The base station of claim 1 wherein said means for adapting the radiation pattern of the antenna controls the tilt of the antenna.

3. The base station of claim 2 wherein said means for adapting the radiation pattern of the antenna increases the tilt of the antenna in a downward direction from a minimum tilt to a maximum tilt as the load increases from a minimum level to a maximum level.

4. The base station of claim 3 wherein the variation of tilt with load is piecewise linear.

5. The base station of claim 4 wherein said means for adapting maintains the tilt at said minimum tilt for values of load below a first value, increases the tilt linearly with load for values of load between said first value and a second value and maintains the tilt at said maximum value for values of load greater than said second value.

6. The base station of claim 1 wherein said means for producing a measure of said traffic load employs a transmit signal strength indicator (TSSI).

7. The base station of claim 1 wherein said means for producing a measure of said traffic load employs a received signal strength indicator (RSSI).

8. A wireless network including:
a plurality of base stations serving respective cells, each cell having a traffic load situation and each base station having one or more antennas and means for adapting the radiation pattern of at least one of its one or more antennas; and
a network controller;
a plurality of said base stations being arranged to send to the network controller information about the traffic load situation in the respective cells;
said network controller being responsive to said information to send signals to said base stations to control said means for adapting the radiation patterns.

9. The network of claim 8 wherein said means for adapting the radiation pattern of the antennas control the tilt of the antennas.

10. A method of operating a base station subject to a variable traffic load, said base station having an antenna;
said method comprising producing a measure of said traffic load; and
adapting the radiation pattern of the antenna in response to said measure of traffic load such as to reduce the coverage area of the antenna when the load increases.
